# FASCICULE DE BREVET EUROPEEN

(11) **EP 2 331 309 B1**
(45) Date de publication et mention de la délivrance du brevet: **25.04.2012**
(21) Numéro de dépôt: 09772725.9
(22) Date de dépôt: 19.06.2009
(51) Int. Cl.: B29B 15/10

(54) **INSTALLATION ET PROCÉDÉ D'IMPRÉGNATION D'UN MATÉRIAU POREUX PAR DE LA POUDRE**
VORRICHTUNG UND VERFAHREN ZUM IMPRÄGNIEREN EINES PORÖSEN MATERIALS MIT PULVER
DEVICE AND METHOD FOR IMPREGNATING A POROUS MATERIAL WITH POWDER

(30) Priorité: 02.07.2008 FR 0854503
(43) Date de publication de la demande: 15.06.2011
(73) Titulaire: Fibroline France, 69130 Ecully (FR)
(72) Inventeur: MARDUEL, Joric, F-69380 Chazay D'azergues (FR)
(74) Mandataire: Palix, Stéphane
(86) Numéro de dépôt international: PCT/FR2009/051174
(87) Numéro de publication internationale: WO 2010/001043

(56) Documents cités:
- EP-A- 1 525 969
- EP-A- 1 526 214
- WO-A-99/22920
- WO-A-2007/110524
- BE-A- 488 310
- US-A- 2 473 251

## Description

### DOMAINE TECHNIQUE

La présente invention se rapporte au domaine de l'imprégnation au moyen d'un champ électrique alternatif. Plus précisément, elle concerne un procédé et une installation d'imprégnation d'un matériau poreux, tel qu'un réseau fibreux, par de la poudre.

L'imprégnation d'une nappe fibreuse ou filamenteuse par de la poudre peut être une étape de la fabrication d'un matériau composite, dont la matrice résulte de la fusion ultérieure ou d'une autre transformation de cette poudre au sein des fibres ou des filaments de la nappe. L'imprégnation d'une nappe fibreuse en vue de produire un matériau composite constitue donc un exemple d'application de l'invention.

Bien d'autres applications de l'invention sont également envisageables. Par exemple, l'invention peut être utilisée lors de la fabrication d'un géotextile bentonitique, afin de faire pénétrer une poudre à base d'argile dans une structure textile. Un autre exemple d'application de l'invention est celui de l'introduction d'un principe actif anti-bactérien, anti-feu, super-absorbant ou autre, sous forme d'une poudre sèche ou d'un mélange de poudres, dans une nappe poreuse. Encore un autre exemple d'application est celui de l'introduction d'un liant en poudre au sein d'une nappe de fibres avant de faire fondre puis durcir ce liant de manière à ce qu'il unisse les fibres sur au moins une partie de l'épaisseur de la nappe, le produit final ainsi obtenu pouvant notamment être un revêtement textile tel qu'un tapis.

### TECHNIQUES ANTERIEURES

Dans la demande internationale WO 99/22920, il est décrit un procédé d'imprégnation d'un réseau fibreux ou filamenteux par de la poudre, notamment pour produire un matériau composite. Dans ce procédé, on soumet ensemble la poudre et le réseau de fibres ou de filaments à un champ électrique alternatif, que deux électrodes connectées à un même générateur de tension produisent entre elles. Chaque électrode présente la forme d'une plaque métallique. Des plaques de diélectrique ont pour fonction d'empêcher la formation d'un arc électrique entre les électrodes. On a constaté que, notamment lors de fonctionnements à des niveaux élevés du champ électrique entre les électrodes, les plaques de diélectrique tendaient à vieillir rapidement jusqu'à ne plus pouvoir remplir leur fonction d'isolation, d'où il s'ensuivait un claquage résultant d'un arc électrique à travers l'une au moins des plaques de diélectrique.

Dans la demande de brevet européen EP-1 526 214, il est proposé une autre manière de créer le champ électrique destiné à faire pénétrer de la poudre dans un réseau fibreux ou filamenteux. Plus précisément, ce champ est créé entre deux rangées de tubes électrodiques, dont chacun comporte un isolant tubulaire fait de quartz ou d'un autre diélectrique, ainsi qu'une couche conductrice recouvrant une face interne de cet isolant. L'emploi de tels tubes électrodiques a permis l'imprégnation de nappes de grandes dimensions, en particulier de larges bandes que l'on traite en continu en les faisant défiler entre les deux rangées de tubes électrodiques. Toutefois, chaque tube électrodique est extrêmement coûteux, ce qui handicape la solution proposée dans la demande de brevet européen EP-1 526 214.

La demande internationale WO 2007/110524 décrit un dispositif d'imprégnation par une poudre sous un champ électrique qui peut utiliser plusieurs électrodes disposées dans le sens d'avancement du produit à imprégner, ces électrodes étant connectées de façon à produire des champs antiparallèles.

L'invention a au moins pour but d'améliorer, d'une manière aussi économique que possible, la longévité d'une installation d'imprégnation par mise en oeuvre d'un champ électrique alternatif.

### RESUME DE L'INVENTION

Selon l'invention, ce but est atteint grâce à une installation d'imprégnation d'un matériau poreux par de la poudre, comprenant au moins un premier écran isolant de diélectrique, ainsi que des première et deuxième électrodes en regard qui sont séparées par un passage pour le matériau poreux pourvu de la poudre et qui sont à même de produire un champ électrique alternatif dans ce passage après avoir été connectées à un générateur de tension alternative. Le premier écran de diélectrique isole électriquement les première et deuxième électrodes l'une de l'autre au niveau dudit passage. La première électrode au moins comporte au moins deux bandes conductrices dont chacune possède une face interne recouverte par le premier écran de diélectrique et tournée globalement vers la deuxième électrode, ainsi qu'un bord longitudinal longeant une fente de séparation, qui sont séparées l'une de l'autre par cette fente de séparation et qui sont connectées électriquement l'une à l'autre.

On a constaté que, lorsque l'une ou chacune des électrodes à l'origine du champ électrique alternatif est discontinue en étant divisée de manière appropriée en bandes successives, l'écran de diélectrique recouvrant sa face interne présente une bien meilleure tenue au vieillissement, dans la mesure où aucun claquage à travers cet écran de diélectrique n'a lieu après un long fonctionnement à des valeurs élevées du champ électrique alternatif. On a également constaté que l'échauffement de l'électrode divisée de manière appropriée en bandes successives était moindre que dans le cas d'une électrode continue qui couvre la même surface que l'ensemble de ces bandes successives. On pense que le moindre échauffement de l'électrode divisée en bandes est à l'origine de la meilleure tenue dans le temps de l'écran de diélectrique, en réduisant les contraintes thermiques auxquelles cet écran est soumis durant le fonctionnement de l'installation.

Avantageusement, l'installation d'imprégnation comprend un dispositif d'entraînement du matériau poreux dans ledit passage, selon une direction de progression selon laquelle se succèdent les bandes conductrices de la première électrode.

Avantageusement, le premier écran de diélectrique forme un support pour les bandes conductrices de la première électrode.

Avantageusement, l'installation comprend un deuxième écran de diélectrique qui isole électriquement les première et deuxième électrodes l'une de l'autre au niveau dudit passage, la deuxième électrode comportant au moins deux bandes conductrices dont chacune possède une face interne recouverte par le deuxième écran de diélectrique et tournée globalement vers la première électrode, ainsi qu'un bord longitudinal longeant une fente de séparation, qui sont séparées l'une de l'autre par cette fente de séparation et qui sont connectées électriquement l'une à l'autre.

L'invention a également pour objet un procédé d'imprégnation d'un matériau poreux par de la poudre, dans lequel on soumet ensemble le matériau poreux et la poudre à un champ électrique alternatif produit par des première et deuxième électrodes en regard, au moins un premier écran de diélectrique isolant électriquement les première et deuxième électrodes l'une de l'autre, entre ces première et deuxième électrodes. La première électrode au moins comporte au moins deux bandes conductrices dont chacune possède une face interne recouverte par le premier écran de diélectrique et tournée globalement vers la deuxième électrode, ainsi qu'un bord longitudinal longeant une fente de séparation, qui sont séparées l'une de l'autre par cette fente de séparation et qui sont connectées électriquement l'une à l'autre.

Avantageusement, ce procédé est mis en oeuvre au moyen d'une installation telle que définie précédemment.

### DESCRIPTION SOMMAIRE DES FIGURES

L'invention sera bien comprise à la lecture de la description qui va suivre, donnée à titre d'exemple non limitatif et faite en se référant aux dessins annexés, parmi lesquels :
- la figure 1 est un schéma d'une installation d'imprégnation qui est conforme à l'invention et dans laquelle une nappe fibreuse, représentée en coupe longitudinale, est imprégnée d'une poudre ;
- la figure 2 est une vue schématique, en perspective, d'une paire de sous-ensembles en regard de l'installation d'imprégnation de la figure 1 ;
- la figure 3 est un graphique où sont représentées graphiquement deux évolutions de température maximale en fonction du temps, à savoir l'évolution de la température maximale sur une électrode de l'installation de la figure 1 et l'évolution de la température maximale sur une électrode d'une installation d'imprégnation de l'art antérieur ;
- la figure 4 est un schéma analogue à la figure 1 et représente une paire de sous-ensembles en regard qui peuvent remplacer ceux de la figure 2, selon une première variante de réalisation de l'invention ; et
- la figure 5 est une vue de dessus d'un sous-ensemble dont une paire peut remplacer les deux sous-ensembles de la figure 2, selon une deuxième variante de réalisation de l'invention.

### MANIERES POSSIBLES DE REALISER L'INVENTION

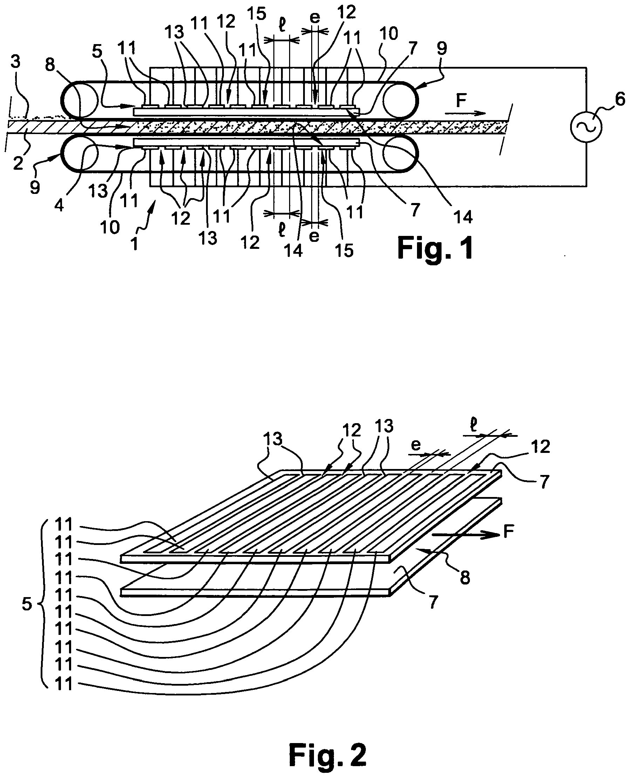

Sur la figure 1 est représentée une installation d'imprégnation **1**, qu'une nappe fibreuse **2** traverse en progressant dans le sens matérialisé par la flèche **F** et où cette nappe fibreuse **2** est imprégnée par de la poudre **3**.

L'installation d'imprégnation **1** comporte une paire d'électrodes en regard, dont chacune est connectée à l'une des deux bornes d'une source ou générateur de tension alternative **6** et qui sont une électrode inférieure **4** et une électrode supérieure **5**. Chacune de ces deux électrodes **4** et **5** est portée par une plaque qui est faite d'un matériau diélectrique et qui forme un écran isolant **7**. Les écrans **7** sont placés entre les électrodes **4** et **5**, de manière à les isoler électriquement l'une de l'autre. Ils délimitent entre eux un passage plan **8** pour la nappe fibreuse **2**.

Dans l'exemple représenté, un dispositif d'entraînement de la nappe fibreuse **2** dans le passage **8**, selon le sens de progression **F**, comporte deux convoyeurs à bande **9**, qui sont disposés l'un au dessus de l'autre de manière à être sensiblement parallèles entre eux. Les bandes **10** respectives de ces deux convoyeurs **9** passent dans le passage **8**, où elles progressent parallèlement et dans le même sens **F**. Après avoir saisi entre elles la nappe fibreuse **2**, ces bandes peuvent l'entraîner ensemble le long du passage **8**. Afin que cela soit possible pour des nappes fibreuses **2** de différentes épaisseurs, l'écartement vertical des convoyeurs **9** est réglable, d'une manière connue en soi.

Chacune des électrodes **4** et **5** est discontinue et constituée d'une rangée de bandes conductrices **11**, qui se succèdent en étant séparées les unes des autres par des discontinuités ou hiatus en forme de fentes **12** sans matériau conducteur. Ainsi qu'on peut bien le voir à la figure 2, les bandes **11** s'étendent du côté gauche du passage **8** jusqu'à son côté droit, sur toute la largeur de ce passage **8**, en étant non parallèles au sens de progression **F**. Tout en se longeant mutuellement, les bandes conductrices **11** d'une même électrode **4** ou **5** peuvent posséder diverses formes. Dans l'exemple des figures 1 et 2, elles sont rectilignes et parallèles entre elles.

Chaque bande conductrice **11** comporte deux bords longitudinaux **13** et deux faces principales opposées, que ces bords longitudinaux **13** relient entre elles et qui sont une face interne **14** globalement tournée vers le passage **8** et une face externe **15**. Chaque fente **12** est délimitée par deux bords longitudinaux **13**, dont chacun se trouve sur l'une de deux bandes **11** successives. Chaque bande conductrice **11** possède un bord longitudinal **13** longeant une des fentes **12**, qui la sépare d'une autre bande conductrice **11**.

La largeur des fentes **12**, c'est-à-dire l'espacement **e** entre deux bandes conductrices **11** consécutives, est de préférence supérieure à 20 mm. De préférence, l'espacement **e** est également inférieur à 200 mm. Il est avantageusement compris entre 25 et 50 mm.

La largeur ℓ de chaque bande conductrice **11** est avantageusement comprise entre 10 mm et 1000 mm et elle est de préférence comprise entre 20 mm et 100 mm.

Dans un exemple ayant donné de bons résultats, chaque bande conductrice **11** possède une largeur ℓ de l'ordre de 50 mm, tandis que les fentes **12** possèdent une largeur **e** de l'ordre de 25 mm.

Les bandes conductrices **11** peuvent être réalisées de diverses manières. Par exemple, chaque bande conductrice **11** peut présenter la forme d'un revêtement métallique, qui est déposé localement sur l'un des diélectriques **7** par mise en oeuvre d'une technique de métallisation. Chaque bande conductrice **11** peut également être constituée d'une couche de résine fortement chargée en particules métalliques, telle qu'une laque à l'argent. Dans un cas comme dans l'autre, aucune lame d'air ne se trouve entre les bandes conductrices **11** et leur support. L'absence de telles lames d'air fait que, lors de la production du champ électrique entre les éléctrodes, aucun plasma n'est produit entre un écran **7** et les bandes conductrices **11** que porte cet écran **7**. Ceci est avantageux en termes de tenue au vieillissement.

Les électrodes **4** et **5** sont prévues pour générer un champ électrique alternatif entre elles, au niveau du passage **8**. Pour ce faire, les bandes conductrices **11** de l'une de ces deux électrodes **4** et **5** peuvent être disposées de plusieurs manières par rapport aux bandes conductrices **11** de l'autre électrode. Dans l'exemple de la figure 1, chaque bande conductrice **11** de l'électrode inférieure **4** est en vis-à-vis d'une bande conductrice **11** de l'électrode supérieure **5**.

Les écrans de diélectrique **7** isolent électriquement les électrodes **4** et **5** l'une de l'autre, de manière à s'opposer à la formation d'un arc électrique entre ces deux électrodes **4** et **5**. A cet effet, ils sont disposés entre les électrodes **4** et **5**, de part et d'autre du passage **8**. Le matériau diélectrique des écrans **7** peut en particulier être du verre.

Notamment lorsque l'application choisie autorise l'emploi de niveaux de champs électriques parmi les moins élevés, il est possible de ne recouvrir d'un écran **7** qu'une seule des deux électrodes **4** et **5**. De préférence toutefois, chaque électrode **4** ou **5** est pourvue d'un écran isolant **7**.

Sur la figure 1, une nappe fibreuse est imprégnée de poudre **3**, qui a été préalablement saupoudrée sur sa face supérieure. Le saupoudrage est généralement réalisé sur l'ensemble de la surface de la nappe à imprégner. Dans certains cas toutefois, il est également possible d'effectuer un saupoudrage localisé, par exemple au moyen d'un pochoir. En outre, au moins une partie de la poudre **3** peut ne pas être déposée sur le dessus de la nappe fibreuse **2**, mais être introduite en dessous de cette nappe fibreuse **2**, avant le passage entre les électrodes **4** et **5**, par exemple en étant déposée sur le convoyeur **9** inférieur modifié en conséquence.

La poudre **3** peut être constituée de particules de polymère destinées à être fondues pour, après refroidissement, former la matrice d'un matériau composite renforcé par les fibres de la nappe **2** ou assurer la cohésion d'un revêtement textile tel qu'un tapis, en unissant les fibres de ce revêtement textile par exemple au niveau d'une éventuelle zone de liaison que peut comporter la nappe **2** sur une partie de son épaisseur et où les fibres s'intègrent dans un enchevêtrement serré. La poudre **3** peut être un matériau pulvérulent autre que des particules de polymère destinées à être fondues une fois à l'intérieur de la nappe **2**. Par exemple, il peut également s'agir d'une argile de la famille des bentonites ou d'un principe actif. Les fibres de la nappe **2** peuvent se présenter sous la forme d'un mat ou bien être liées entre elles par aiguilletage ou de toute autre manière. Par ailleurs, le matériau destiné à être imprégné par la poudre **3** peut ne pas être fibreux, tout en étant poreux de manière à pouvoir être imprégné.

Les convoyeurs **9** amènent la nappe fibreuse **2** et la poudre **3** ensemble entre les électrodes **4** et **5**, dans le passage **8** et les y fait progresser d'une manière sensiblement continue. Au niveau du passage **8,** le champ électrique alternatif généré par les électrodes **4** et **5** fait pénétrer la poudre **3** dans la nappe fibreuse **2**. Comme il est alternatif, le champ généré entre les électrodes **4** et **5** possède un maximum, dont la valeur est choisie selon l'application, notamment selon les particularités de la nappe **2** et/ou celles de la poudre **3**. Des valeurs de ce maximum comprises entre 0,10 et 20 kV/mm ont convenu dans nombre d'applications. Par ailleurs, la tension d'alimentation des électrodes **4** et **5** peut présenter diverses formes. Par exemple, le générateur **6** peut produire une tension sinusoïdale, ou carrée, ou bien encore triangulaire.

La fréquence du champ électrique généré entre les électrodes **4** et **5** est choisie en fonction de l'application. Des fréquences comprises entre 50 et 60 Hz ont convenu dans nombre d'applications.

Une imprégnation convenable n'est obtenue qu'après que la nappe fibreuse **2** et la poudre **3** ont été exposées au champ électrique alternatif pendant un temps suffisant. Celui-ci dépend de l'application et d'autres paramètres de procédé. Il peut être aisément déterminé expérimentalement. En général, il est de plus d'une seconde.

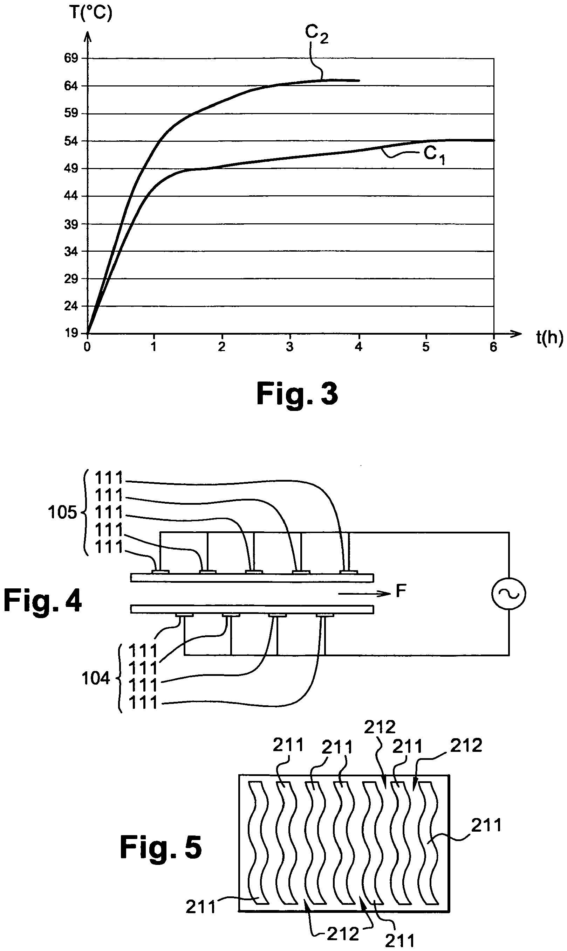

A l'aide d'une caméra infrarouge, on a relevé la température maximale au niveau de l'une des électrodes **4** et **5**, dans le cas où la largeur ℓ des bandes **11** et l'espacement **e** entre ces bandes **11** sont respectivement de 50 mm et de 25 mm. L'évolution de cette température en fonction du temps, à partir d'un démarrage de l'installation **1** et en l'absence de tout refroidissement, a pour représentation graphique la courbe **C₁** à la figure 3. Sur cette même figure 3, la courbe **C₂** est également une représentation graphique de l'évolution d'une température maximale mesurée par une caméra infrarouge, au niveau d'électrodes, en l'absence de tout refroidissement de ces électrodes. Elle a été obtenue avec des électrodes continues, comparables à celles de l'art antérieur mentionné dans la demande précitée WO 99/22920, toutes choses étant égales par ailleurs. Plus précisément, chacune de ces électrodes continues, sur lesquelles ont été mesurées les températures maximales employées pour tracer la courbe **C₂**, présente la forme d'un rectangle dont la largeur est de l'ordre de la longueur d'une bande **11**.

Ainsi que cela ressort clairement d'une comparaison des courbes **C₁** et **C₂**, les électrodes discontinues **4** et **5** s'échauffent notablement moins que des électrodes continues, toutes choses étant égales par ailleurs. Parallèlement, on a constaté que les écrans isolants **7** associés aux électrodes **4** et **5** présentaient une bien meilleure tenue dans le temps que des écrans isolants semblables associés à des électrodes continues. En particulier, aucun claquage à travers les écrans **7** n'a été observé après plusieurs heures d'utilisation de l'installation de la figure 1. Tel ne fut pas le cas après l'utilisation pendant plusieurs heures consécutives, dans les mêmes conditions, de l'installation d'imprégnation dont proviennent les mesures utilisées pour tracer la courbe **C₂**.

D'autres avantages consécutifs à l'utilisation des électrodes discontinues **4** et **5** ont également été constatés. L'un de ces avantages est l'obtention d'une imprégnation plus homogène, notamment lorsque augmente la conductivité électrique de la poudre **3**. En particulier, des concentrations de poudre **3** se forment entre des électrodes continues de l'art antérieur. Elles s'allongent dans la direction perpendiculaire à ces électrodes et suivent la nappe fibreuse dans sa progression. De telles concentrations de poudre ne sont pas apparues lors d'imprégnations au moyen de l'installation **1**.

Une plus grande efficacité de l'imprégnation a également été constatée dans le cas où elle résulte de l'emploi des électrodes **4** et **5**. Cette plus grande efficacité peut s'expliquer par l'existence de plusieurs variations brutales du champ selon la direction parallèle au sens de progression **F**, du fait de la discontinuité des électrodes **4** et **5**. La meilleure efficacité d'imprégnation résultant de l'emploi de ces électrodes **4** et **5** peut également avoir pour cause le nombre de bords transversaux que possède chacune de ces électrodes **4** et **5**. Or, le champ électrique généré au niveau du bord d'une électrode est plus intense, ce qu'on appelle « l'effet de bord ». Dans le cas de l'utilisation des électrodes **4** et **5,** la nappe fibreuse **2** et la poudre **3** sont soumises à de multiples effets de bord durant leur progression le long du passage **8.**

L'invention ne se limite pas au mode de réalisation des figures 1 à 3. En particulier, chaque bande conductrice **11** de l'électrode inférieure peut ne pas être en vis-à-vis d'une bande conductrice **11** de l'électrode supérieure **5.** Tel est par exemple le cas à la figure 4, où sont représentées une paire d'électrodes en regard **104** et **105** selon une première variante de réalisation de l'invention. Ces électrodes **104** et **105** sont équivalentes aux électrodes **4** et **5**, qu'elles peuvent remplacer dans l'installation 1. Chacune d'elles est constituée d'une rangée de bandes conductrices **111**. Les bandes conductrices **111** de l'électrode **104** et celles de l'électrode **105** sont décalées les unes des autres parallèlement au sens de progression **F**, de manière à être en quinconce. Bien entendu, elles peuvent également être moins décalées les unes des autres. En outre, une bande conductrice d'une électrode peut être en partie en regard d'une bande conductrice de l'autre électrode et en partie en regard d'une fente séparant deux bandes conductrices consécutives de cette autre électrode.

Par ailleurs, les bandes conductrices **11** ou **111** de l'une des électrodes peuvent être dirigées selon des directions non parallèles aux bandes conductrices **11** ou **111** de l'autre électrode.

Les bandes conductrices des électrodes en regard peuvent en outre posséder diverses formes. Notamment, elles peuvent ne pas être rectilignes, ce qui est le cas des bandes conductrices **211** représentées à la figure 5. Ces bandes conductrices **211** forment l'une des deux électrodes en regard d'une installation d'imprégnation selon une deuxième variante de réalisation de l'invention. Elles remplissent la même fonction que les bandes conductrices **11** et **111**, tout en étant ondulées, comme les fentes **212** qui les séparent les unes des autres. Chaque bande conductrice **211** s'étend selon une ondulation qui peut présenter bien d'autres formes que celle représentée à la figure 5 et qui peut, par exemple, être une ondulation carrée ou triangulaire.

Par ailleurs, les bandes conductrices **11**, **111** ou **211** d'une même installation d'imprégnation **1** peuvent ne pas avoir toute la même largeur ℓ. Par exemple, des bandes conductrices **11**, **111** ou **211** larges peuvent alterner avec des bandes conductrices **11**, **111** ou **211** plus étroites. De même, les bandes conductrices **11**, **111** ou **211** de l'une des deux électrodes en regard peuvent ne pas avoir la même largeur que les bandes conductrices **11**, **111** ou **211** de l'autre électrode de la paire d'électrodes en regard. Plus généralement, les bandes conductrices des deux électrodes en regard peuvent ne pas avoir la même forme.

Egalement, au moins l'une des bandes conductrices **11**, **111** ou **211** peut ne pas posséder une largeur ℓ constante. Par exemple, elle peut s'amincir vers l'une de ses deux extrémités et présenter une forme globalement trapézoïdale.

## Revendications

1. Installation d'imprégnation d'un matériau poreux (2) par de la poudre (3), comprenant au moins un premier écran isolant de diélectrique (7), ainsi que des première et deuxième électrodes en regard (4,5 ; 104,105) qui sont séparées par un passage (8) pour le matériau poreux (2) pourvu de la poudre (3) et qui sont à même de produire un champ électrique alternatif dans ce passage (8) après avoir été connectées à un générateur de tension alternative (6), le premier écran de diélectrique (7) isolant électriquement les première et deuxième électrodes (4,5 ; 104,105) l'une de l'autre au niveau dudit passage (8), ***caractérisée* en ce que** la première électrode (4,5 ; 104,105) au moins comporte au moins deux bandes conductrices (11 ; 111 ; 211) dont chacune possède une face interne (14) recouverte par le premier écran de diélectrique (7) et tournée globalement vers la deuxième électrode (4,5 ; 104,105), ainsi qu'un bord longitudinal (13) longeant une fente de séparation (12 ; 212), qui sont séparées l'une de l'autre par cette fente de séparation (12) et qui sont connectées électriquement l'une à l'autre.

2. Installation d'imprégnation selon la revendication 1, ***caractérisée* en ce qu'**elle comprend un dispositif (9) d'entraînement du matériau poreux (2) dans ledit passage (8), selon une direction de progression (F) selon laquelle se succèdent les bandes conductrices (11 ; 111 ; 211) de la première électrode (4,5 ; 104,105).

3. Installation d'imprégnation selon l'une quelconque des revendications 1 et 2, ***caractérisée* en ce que** le premier écran de diélectrique (7) forme un support pour les bandes conductrices (11 ; 111 ; 211) de la première électrode (4,5 ; 104,105).

4. Installation d'imprégnation selon l'une quelconque des revendications précédentes, ***caractérisée* en ce qu'**elle comprend un deuxième écran de diélectrique (7) qui isole électriquement les première et deuxième électrodes (4,5 ; 104,105) l'une de l'autre au niveau dudit passage (8), la deuxième électrode comportant au moins deux bandes conductrices (11 ; 111 ; 211) dont chacune possède une face interne (14) recouverte par le deuxième écran de diélectrique (7) et tournée globalement vers la première électrode (4,5 ; 104,105), ainsi qu'un bord longitudinal (13) longeant une fente de séparation (12 ; 212), qui sont séparées l'une de l'autre par cette fente de séparation (12 ; 212) et qui sont connectées électriquement l'une à l'autre.

5. Procédé d'imprégnation d'un matériau poreux (2) par de la poudre (3), dans lequel on soumet ensemble le matériau poreux (2) et la poudre (3) à un champ électrique alternatif produit par des première et deuxième électrodes en regard (4,5 ; 104,105), au moins un premier écran de diélectrique (7) isolant électriquement les première et deuxième électrodes (4,5 ; 104,105) l'une de l'autre, entre ces première et deuxième électrodes, ***caractérisée* en ce que** la première électrode (4,5 ; 104,105) au moins comporte au moins deux bandes conductrices (11 ; 111 ; 211) dont chacune possède une face interne (14) recouverte par le premier écran de diélectrique (7) et tournée globalement vers la deuxième électrode (4,5 ; 104,105), ainsi qu'un bord longitudinal (13) longeant une fente de séparation (12 ; 112), qui sont séparées l'une de l'autre par cette fente de séparation (12 ; 112) et qui sont connectées électriquement l'une à l'autre.

6. Procédé d'imprégnation selon la revendication 5, ***caractérisée* en ce qu'**il est mis en oeuvre au moyen d'une installation selon l'une quelconque des revendications 1 à 4.

## Claims

1. Device for impregnating a porous material (2) with powder (3), comprising at least a first dielectric insulating screen (7) and and second opposite-facing electrodes (4,5; 104,105) which are separated by a passage (8) for the porous maternal (2) provided with powder (3) and are capable of producing an electric field in this passage (8) having been connected to an alternating voltage generator (6), with the first dielectric screen (7) electrically insulating the first and second electrodes (4,5; 104,105) from each other at the level of said passage (8), ***characterised* in that** at least first electrode (4,5; 104,105) comprises at least two conducting strips (11; 111; 211), each of which has an internal face (14) covered by the first dielectric screen (7) overall, turned towards the second electrode (4,5; 104,105), and also a longitudinal edge (13) running along a separating slot (12; 212), which strips are separated from each other by this separating slot (12) and are electrically connected to one another.

2. Impregnation device as claimed in claim 1, ***characterised* in that** it comprises a drive unit (9) for transporting porous material (2) through said passage (8) in a feed direction (F) in which there are the successive conducting strips (11; 111; 211) of first electrode (4,5; 104,105).

3. Impregnation device as claimed in either of claims 1 and 2, ***characterised* in that** first dielectric screen (7) forms a support for conducting strips (11; 111; 211) of first electrode (4,5; 104,105).

4. Impregnation device as claimed in any of the above claims, ***characterised* in that** it comprises a second dielectric screen (7) that electrically insulates first and second electrodes (4,5; 104,105) from each other at the level of said passage (8), with the second electrode comprising at least two conducting strips (11; 111 ; 211), each of which has an internal face (14) covered by the second dielectric screen (7) and, overall, turned towards the first electrode (4,5; 104,105) and also a longitudinal edge (13) running along a separating slot (12; 212), which strips are separated from each other by this separating slot (12; 212) and are electrically connected to one another.

5. Method for impregnating a porous maternal (2) with powder (3) in which porous material (2) and powder (3) are both subjected to an alternating electric field produced by the first and second opposite-facing electrodes (4,5; 104,105), with at least a first dielectric screen (7) electrically insulating the first and second electrodes (4,5; 104,105) from each other, between the first and second electrodes, ***characterised* in that** at least first electrode (4,5; 104,105) comprises at least two conducting strips (11; 111; 211), each of which has an internal face (14) covered by the first dielectric screen (7) and, overall, turned towards the second electrode (4,5; 104,105), and also a longitudinal edge (13) running along a separating slot (12; 112), which strips are separated from each other by this separating slot (12; 112) and are electrically connected to one another.

6. Impregnation method as claimed in claim 5, ***characterised* in that** it is implemented using a device according to any of claims 1 to 4.

## Patentansprüche

1. Einrichtung zum Imprägnieren eines porösen Materials (2) mit Pulver (3), mindestens eine isolierende Abschirmung aus Dielektrikum (7) sowie einander gegenüberliegende erste und zweite Elektroden (4, 5; 104, 105) umfassend, die durch einen Durchgang (8) für das mit dem Pulver (3) versehene poröse Material (2) getrennt und imstande sind, ein Wechselspannungsfeld in diesem Durchgang (8) zu erzeugen, nachdem sie an einen Wechselspannungsgenerator (6) angeschlossen wurden, wobei die erste Abschirmung aus Dielektrikum (7) die ersten und zweiten Elektroden (4, 5; 104, 105) voneinander im Bereich des Durchgangs (8) elektrisch isoliert, **dadurch gekennzeichnet, dass** zumindest die erste Elektrode (4, 5; 104, 105) mindestens zwei leitfähige Bänder (11; 111; 211) umfasst, wovon jedes eine Innenseite (14), die mit der ersten Abschirmung aus Dielektrikum (7) bedeckt und insgesamt zur zweiten Elektrode (4, 5; 104, 105) gewandt ist, sowie einen Längsrand (13) besitzt, der entlang eines Trennspalts (12; 212) verläuft, die voneinander durch diesen Trennspalt (12) getrennt und elektrisch miteinander verbunden sind.

2. Einrichtung zum Imprägnieren nach Anspruch 1, dadurch gekenntzeichnet, dass sie eine Vorrichtung (9) zur Mitnahme des porösen Materials (2) in den Durchgang (8) in einer Fortschrittsrichtung (F) umfasst, in der die leitfähigen Bänder (11; 111; 211) der ersten Elektrode (4, 5; 104, 105) aufeinander folgen.

3. Einrichtung zum Imprägnieren nach einem der Ansprüche 1 und 2, **dadurch gekennzeichnet, dass** die erste Abschirmung aus Dielektrikum (7) einen Träger für die die leitfähigen Bänder (11; 111; 211) der ersten Elektrode (4, 5; 104, 105) bildet.

4. Einrichtung zum Imprägnieren nach einem der vorhergehenden Ansprüche, **dadurch gekennzeichnet, dass** sie eine zweite Abschirmung aus Dielektrikum (7) umfasst, die die ersten und zweiten Elektroden (4, 5; 104, 105) im Bereich des Durchgangs (8) elektrisch voneinander isoliert, wobei die zweite Elektrode mindestens zwei leitfähige Bänder (11; 111; 211) umfasst, wovon jedes eine Innenseite (14), die mit der zweiten Abschirmung aus Dielektrikum (7) bedeckt und insgesamt zur ersten Elektrode (4, 5; 104, 105) gewandt ist, sowie einen Längsrand (13) besitzt, der entlang eines Trennspalts (12; 212) verläuft, die voneinander durch diesen Trennspalt (12; 212) getrennt und elektrisch miteinander verbunden sind.

5. Verfahren zum Imprägnieren eines porösen materials (2) mit Pulver (3), bei dem das poröse Material (2) und das Pulver (3) zusammen einem Wechselspannungsfeld ausgesetzt werden, das durch die ersten und zweiten einander gegenüberliegenden Elektroden (4, 5; 104, 105) erzeugt wird, wobei zumindest eine erste Abschirmung aus Dielektrikum (7) zwischen diesen ersten und zweiten Elektroden die ersten und zweiten Elektroden (4, 5; 104, 105) elektrisch voneinander isoliert, **dadurch gekennzeichnet, dass** zumindest die erste Elektrode (4, 5; 104, 105) mindestens zwei leitfähige Bänder (11; 111; 211) umfasst, wovon jedes eine Innenseite (14), die mit der ersten Abschirmung aus Dielektrikum (7) bedeckt und insgesamt zur zweiten Elektrode (4, 5; 104, 105) gewandt ist, sowie einen Längsrand (13) besitzt, der entlang eines Trennspalts (12; 212) verläuft, die voneinander durch diesen Trennspalt (12; 212) getrennt und elektrisch miteinander verbunden sind.

6. Verfahren zum Imprägnieren nach Anspruch 5, **dadurch gekennzeichnet, dass** es mittels einer Einrichtung nach einem der Ansprüche 1 bis 4 durchgeführt wird.
